# EUROPEAN PATENT APPLICATION

(11) **EP 1 447 940 A2**
(43) Date of publication of application: **18.08.2004**
(21) Application number: 04250476.1
(22) Date of filing: 28.01.2004
(51) Int. Cl.: H04L 12/28

(54) **Method for measuring a user perception score**

(30) Priority: 12.02.2003 GB 0303249
(71) Applicant: Ubinetics Limited, Melbourn, Hertfordshire SG8 6DP (GB)
(72) Inventor: Windred, Philip, Melbourn, Hertfordshire SG8 6ED (GB)
(74) Representative: Pratt, David Martin

(57) **Abstract**

A method of measuring the UPS for an application running on a mobile telecommunications network comprises the steps of:
a) running a real application (1) within a computer simulated environment (2) based on a particular set of mobile communications network QoS data;
b) assessing the performance of step a) to produce a UPS (4);
c) loading the correlation between the assessed UPS and the particular set of QoS data used in step a) onto a test mobile communications device (6); and
d) running an end-to-end simulation of the application between the test mobile communications device and a test application loaded on a computer (7) via a real network (8) to generate new QoS data and to derive a UPS.

## Description

This invention relates to a method of deriving a User Perception Score (UPS) from a set of Quality of Service (QoS) data measured on a packet switched mobile telecommunications network.

An application running on a mobile telecommunications network, and in particular a packet switched network, can have a unique profile in terms of its demands on the network. The aim of the invention is to derive a UPS specific to a particular application or class of applications from a measured QoS data set.

The invention provides a method of measuring the UPS for an application running on a mobile telecommunications network, the method comprising the steps of:
a) running a real application within a computer simulated environment based on a particular set of mobile communications network QoS data;
b) assessing the performance of step a) to produce a UPS;
c) loading the correlation between the assessed UPS and the particular set of QoS data used in step a) onto a test mobile communications device; and
d) running an end-to-end simulation of the application between the test mobile communications device and a test application loaded on a computer via a real network to generate a new set of QoS data and to derive a UPS.

In a preferred embodiment, the method further comprises repeating step a) a plurality of times, each repetition of step a) having one or more of the parameters of the network QoS data set varied, thereby to produce a library of UPSs.

Said parameters may be varied manually or by using a test script.

Preferably, the end-to-end simulation of step d) is repeated to produce a library of sets of QoS data.

Advantageously, steps a), b), c) and d) are repeated until the new QoS data set generated at steps d) is consistent with the set of QoS data used in step a) to a predetermined accuracy.

Advantageously, the method further comprises the step of analysing correlations between the QoS data set and RF measurements made by the test mobile communications device during step d).

The end-to-end simulation of step d) may be carried out manually or automatically using pre-loaded test scripts on the test mobile communications device and the computer.

The method of the invention allows UPSs to be collected by testing packet data applications with real users, but using a simulation of the mobile phone network rather than a real network. All the key QoS characteristics of a mobile phone network can be varied in a systematic way, with a UPS being derived for each particular combination of characteristics. In this way, a database is created which records the relationship between the UPS for a given application and the key network QoS characteristics. This database, which is extended to cover a range of different packet data applications, is stored within the test mobile communications device and the computer connected to the core network, and are used in combination to collect real QoS data in a network by running a simulated end-to-end call. Thus, by using the database, the measured network QoS data is converted into one or more UPS scores, each applicable to a particular application.

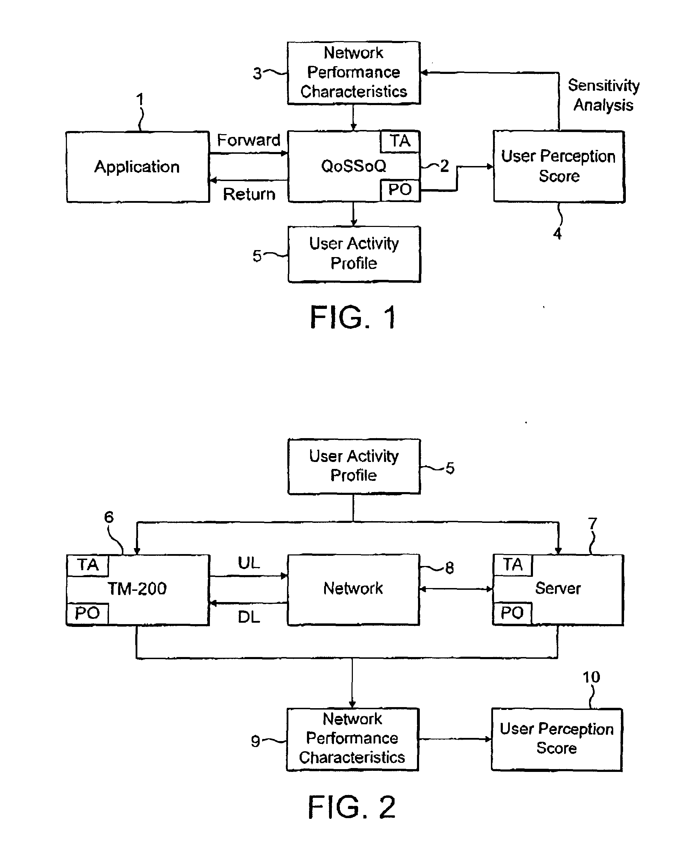

The invention will now be described in greater detail, by way of example, with reference to the drawing, in which:-
Figures 1 and 2 are block diagrams illustrating the steps of one way of carrying out the invention.

Referring to the drawing, the method of the invention may include the following steps:
1. An application 1 (i.e a real application such as a game, an email server, etc) is run within a simulated, end-to-end application test environment on a PC 2 (see Figure 1). The simulated environment 2 simulates how the application 1 would run on a real network. The simulated environment 2 functions either by replaying recorded network performance characteristics stored in block 3 or by using a generic Internet Protocol (IP) network simulation, calibrated using the network performance characteristics stored in the block 3. Those network performance characteristics 3 and a QoS data set are measured by a test mobile phone (not shown) used actively across a real network. The specification of our UK patent application entitled "Developing a User Activity Profile" - and filed on the same date as this application - describes how the network performance characteristics 3 are developed. The application 1 is run end-to-end, with the simulated environment 2 acting as the communications path between the two ends of the application.
2. As well as running actual measured network performance characteristics as a QoS data set, the simulated environment 2 will allow all QoS data to be varied. The QoS data can be varied either manually or by software (test script) control. The QoS data set includes, but is not limited to, the following:
   the probability of each call attempt being successful;
   the time taken to establish a call;
   the allocation of QoS parameters by the network as a function of the QoS requested;
   the model defining the probability of the network changing the QoS parameters during a call;
   the duration of a call;
   the probability of a call being dropped prior to call termination, and the associated probability and delays associated with re-establishing the call;
   the effective data rate of the call, including the variation of the data rate during the call;
   the latency data (i.e. the delay between sending each packet and that packet being received) including the variation of the latency during the call; and
   the probability of bit errors, including their distribution (particularly the bursty nature of errors).
3. The user experience of using the application 1 within the simulated environment 2 will be assessed to produce a UPS 4. Thus, a real user (e.g a user playing a game) assesses the satisfaction of the application 1 run on the simulated environment 2, and provides a rating (the UPS 4). This is repeated many times to provide UPSs 4 for a "large number of users", thereby enabling a meaningful UPS to be generated by averaging those UPSs. Alternatively, a virtual UP can be built up by inputting the UPSs of previous real users. The UPS 4 is, therefore, a rating of the user experience using the application 1. The UPS rating is analogous to the standard industry methodology for Mean Opinion Score (MOS) as derived for voice quality assessment. It may be possible to use a virtual user with a dedicated tool for generating the UPS 4.
4. The QoS data is then varied, and a new UPS 4 derived for a number of different representative values of QoS data. Thus, the QoS data parameters of step 2 are varied one by one, and an assessment is made to ascertain whether or not the UPS 4 is changed significantly. In other words, step 4 is a series of repeats of steps 2 and 3, with one or more of the parameters being varied for each repetition. Analysis of the variation in the UPS 4 as the QoS data is varied, allows correlations to be derived between the network QoS characteristics and the UPS.
5. This testing will also allow a User Activity Profile (UAP) 5 to be derived for the application 1 under test. This UAP 5 consists of the following:
   a data file containing data which will be sent by a test mobile phone 6 (see Figure 2) on the uplink from the phone to a test application running on a remote server (or a PC) 7 via a real network 8;
   a data file containing data which will be sent by the test application, on the downlink from the server 7 to the test mobile phone 6 via the network 8;
   an activity profile which defines when the test mobile phone 6 should send a data packet on the uplink, and
   an activity profile which defines when the test mobile phone 6 should receive a data packet on the downlink.

   Alternatively, the UAP 5 may be generated in accordance with the method described in the specification of our above-mentioned UK patent application.
6. The correlation between the UPS 4 and the network QoS characteristics derived in step 4 and the UAP 5 derived in step 5 is then implemented on the test mobile phone 6 and on the server 7 to allow end-to-end testing. The test mobile phone 6 is capable of measuring QoS characteristics 9 (such as those listed in step 2). The correlation between the QoS characteristics 9 and the UPS 4 derived in step 4 will then allow the test mobile phone 6 to use the measured network performance (QoS) characteristics to derive a real UPS 10. This allows UPS measurements to be made by the test mobile phone 6 while simulating the application 1 to ensure the measurements are representative.
7. The test mobile phone 6, enabled in step 6 to make UPS measurements 10, is then used on the real network 8. The test mobile phone 6, together with the server 7 connected to the network 8 allows end-to-end testing, and can be used either actively by an engineer or in an unattended mode, using pre-loaded test scripts, to collect UPS measurements 10 on the network in a range of locations (e.g. dense urban, motorway, suburban, rural etc), across different times of day, and for a range of requested QoS parameters. This step thus uses a simulated user (the test mobile phone 6) on a real network 8, using the test application (a programme run on the server 7 to simulate the activity of that server in a real network, or to simulate the activity of a PSTN user).
8. During step 7, it is also possible to collect new network performance (QoS) characteristics 9, as defined in step 2. If necessary, steps 3-8 can then be repeated iteratively to ensure the simulated environment 2, used in testing to derive the UPS 4, is truly representative of the network 8, under the conditions in which the QoS measurements 10 are made. The iterative process is repeated until the QoS measurements 10 are seen to converge to a desired repeatability.
9. It may be necessary to provide for a calibration between the UPS measurements 10 achieved in step 7 and UPS measurements collected manually using a mobile phone in a real environment. In particular, it may be that the lab-based approach implied in step 3 could give systematically better results than those achieved using a user in a real environment which has additional distractions. Such biases will need to be detected by comparison with a manual methodology for UPS measurement and a calibration factor added to the UPS measurements 10 reported by the test mobile phone 6.
10. The UPS 10 collected by the test mobile phone 6 can also be analysed to identify any important correlations between the QoS data and RF measurements made by the test mobile phone 6 or with the UAP being sent by the test mobile phone. Examples of such correlations would include:
   RF measurements (signal strength, interference);
   network QoS events (e.g. bursts of errors, dropped calls, periods of longer packet data delays);
   control plane (c-plane) events (e.g. soft hand over (SHO), use of compressed mode, changes to QoS parameters, number of packet data retransmissions); and
   UAP (i.e. changes in the instantaneous data rate), and the network QoS (particularly latency data).

   The analysis of the data collected by the test mobile phone 6 can be carried out by an engineer, and the analysis of the UPS measurements can be used to rectify network performance defects. For example, if the UPS measurements indicate a reception problem in a particular location, the engineer can report this to the operator of the network so that the transmission power can be increased to improve reception.
11. The UPS measurements 10 can also be used by a load generator (a collection of mobile phones which are co-ordinated to mimic a large group of users' phones in a real network) to assess the correlation between network parameters and the UPS in a loaded radio access network. This may then allow optimal values for those parameters to be determined and validated in a test environment without the risk of an adverse outcome on network users. A load generator developed using this method provides good accuracy, as the u-plane traffic is representative of real applications, and so the results gained from testing against this load generator will also be more accurate. This, in turn, allows optimisation of radio access network parameters by testing against the load generator. Thus, UAPs can be fed into the load generator, which is then run to collect UPSs. These UPSs can then be analysed as in step 10 to identify important correlations. This gives the advantage, when compared with step 10, that a large number of phones can be controlled simultaneously using such a load generator, and this is to be compared with the analysis in step 10 in which only one phone is controlled.

The method of the invention allows a test mobile phone to make UPS measurements specific to a particular application. Given the large number of different applications which are likely to be used over the next few years, it is important to have a methodology to produce a UPS that can apply to a particular application, and the method of the invention provides such a methodology.

Apart from using the method of the invention to produce QoS data, the UPS measurements derived can be used for network optimisation, for the assessment of different applications, for determining the optimal point in a capacity/user satisfaction trade-off, for determining call pricing given the QoS requirements of different applications, and for comparing different networks.

## Claims

1. A method of measuring the UPS for an application running on a mobile telecommunications network, the method comprising the steps of:
a) running a real application within a computer simulated environment based on a particular set of mobile communications network QoS data;
b) assessing the performance of step a) to produce a UPS;
c) loading the correlation between the assessed UPS and the particular set of QoS data used in step a) onto a test mobile communications device; and
d) running an end-to-end simulation of the application between the test mobile communications device and a test application loaded on a computer via a real network to generate new QoS data and to derive a UPS.

2. A method as claimed in claim 1, further comprising repeating step a) a plurality of times, each repetition of step a) having one or more of the parameters of the network QoS data set varied, thereby to produce a library of UPSs.

3. A method as claimed in claim 2, wherein said parameters are varied manually.

4. A method as claimed in claim 2, wherein said parameters are varied using a test script.

5. A method as claimed in any one of claims 2 to 4, wherein said parameters include one or more of:
1) the probability of a call attempt being successful;
2) the time taken to establish a call;
3) the allocation of QoS parameters by the network as a function of the QoS requested;
4) the model defining the probability of the network changing the QoS parameters during a call;
5) the duration of a call;
6) the probability of a call being dropped prior to call termination, and the associated probability and delays associated with re-establishing the call;
7) the effective data rate of the call, including the variation of the data rate during the call;
8) the latency data, including the variation of the latency during the call; and
9) the probability of bit errors, including their distribution.

6. A method as claimed in any one of claims 2 to 5, wherein the end-to-end simulation of step d) is repeated to produce a library of sets of QoS data.

7. A method as claimed in claim 6, wherein steps a), b), c) and d) are repeated until the generated new QoS data at step d) is consistent to the set of QoS data used in step a) to a predetermined accuracy.

8. A method as claimed in claim 6 or claim 7, further comprising the step of analysing correlations between the QoS data and RF measurements made by the test mobile communications device during step d).

9. A method as claimed in claim 8, wherein said correlations include one or more of:
1) RF measurements;
2) network QoS events;
3) c-plane events; and
4) latency data.

10. A method as claimed in any one of claims 1 to 9, wherein the end-to-end simulation of step d) is carried out manually by an engineer.

11. A method as claimed in any one of claims 1 to 9, wherein the end-to-end simulation of step d) is carried out automatically using pre-loaded test scripts on the test mobile communications device and the computer.

12. A method as claimed in any one of claims 1 to 11, further comprising the step of loading a UAP onto the test mobile communications device and the computer prior to running the end-to-end simulation of step d).
